# FASCICULE DE BREVET EUROPEEN

(11) **EP 0 611 899 B1**
(45) Date de publication et mention de la délivrance du brevet: **01.05.1996**
(21) Numéro de dépôt: 94400349.0
(22) Date de dépôt: 17.02.1994
(51) Int. Cl.: F16D 66/02

(54) **Dispositif de détection d'usure de garnitures de friction**
Einrichtung zum Erfassen des Verschleisses von Reibbelägen
Device for detecting wear of friction lining

(30) Priorité: 18.02.1993 FR 9301838
(43) Date de publication de la demande: 24.08.1994
(73) Titulaire: COMPAGNIE PLASTIC OMNIUM, F-69007 Lyon (FR)
(72) Inventeur: Schosseler, René, F-95100 Argenteuil (FR); Schauterden, Jean-Claude, F-52200 Langres (FR); Bartocci, Marcel, F-52200 Langres (FR)
(74) Mandataire: Leszczynski, André

(56) Documents cités:
- DE-A- 2 909 247
- DE-A- 3 443 246
- DE-U- 8 319 837
- GB-A- 2 149 034

## Description

La présente invention est relative à un dispositif de détection d'usure de garnitures de friction, notamment de garnitures de plaquettes de freins.

On connaît déjà des dispositifs permettant de détecter l'usure de garnitures de plaquettes de freins à disque.

Ces dispositifs comportent généralement un fil conducteur électrique gainé qui est introduit dans un trou réalisé sur une face latérale de la garniture, au voisinage de sa plaque-support. Le fil est par exemple relié, par l'intermédiaire d'un circuit électrique, à un voyant situé sur le tableau de bord du véhicule. Un tel dispositif est décrit dans le document GB-A-2 149 034.

Lors du freinage, le disque frotte sur la garniture, et use cette dernière. Lorsque le disque arrive au contact du fil conducteur électrique, le circuit électrique est mis à la masse, ce qui provoque l'allumage du voyant.

On connaît également des dispositifs plus élaborés qui sont basés sur une structure mécanique similaire, mais qui comportent deux fils conducteurs électriques reliés dans la garniture pour fermer un circuit de commande de l'allumage du voyant.

Comme pour les dispositifs monofilaires, la mise à la masse des conducteurs électriques provoque l'allumage du voyant lors du freinage. Mais dans le cas de dispositifs bifilaires, une usure importante de la plaquette provoque la séparation des deux fils et l'ouverture du circuit électrique, ce qui se traduit par l'allumage permanent du voyant.

Tous ces dispositifs connus présentent l'inconvénient important que l'âme du fil conducteur électrique se positionne de manière imprécise à l'intérieur de la garniture, ce qui conduit, d'un dispositif à un autre, à une instabilité du seuil de détection suivant la position de l'âme du fil conducteur électrique à l'intérieur de la garniture.

Ainsi, le seuil de détection d'usure présente une imprécision pouvant atteindre 3mm.

La présente invention vise à fournir un dispositif de détection d'usure de garnitures de friction qui présente une bonne précision de détection, tout en étant d'une réalisation simple et économique.

La présente invention a pour objet un dispositif de détection d'usure de garnitures de friction, notamment de garnitures de plaquettes de freins, comportant au moins un fil conducteur électrique gainé emmanché dans un embout isolant inséré dans un trou réalisé sur une paroi latérale de la garniture, selon un axe sensiblement parallèle à la surface d'usure de la garniture, et caractérisé par une pièce de contact réalisée en un matériau électriquement conducteur et comportant une partie formant pince qui est sertie sur l'extrémité dénudée du fil conducteur électrique, et par le fait que ladite pièce de contact comporte en outre une partie cylindrique calibrée formant manchon, qui enveloppe le fil conducteur électrique, sur sa partie gainée, la partie formant pince et la partie formant manchon de la pièce de contact étant reliées électriquement.

Le dispositif selon l'invention présente, par rapport au disque frottant contre la garniture, une surface de contact dont la position ne dépend pas des déformations ou défauts de positionnement de l'âme électriquement conductrice du fil introduit dans la garniture.

En effet, les deux parties de la pièce de contact selon l'invention remplissent chacune une fonction distincte.

La partie formant pince assure le maintien de la pièce de contact et un bon contact électrique entre l'âme conductrice et ladite pièce de contact, tandis que la partie formant manchon dont le diamètre est, selon l'invention, supérieur au diamètre maximal de la partie formant pince, garantit que le contact avec le disque se produit pour un niveau d'usure de la garniture qui est prédéterminé avec précision.

En effet, du fait de son calibrage, cette partie formant manchon est positionnée de façon stable dans l'embout isolant et, par suite, dans la garniture, indépendamment des déformations que peut subir le fil conducteur électrique gainé.

Grâce à l'invention, on peut ainsi détecter des niveaux d'usure de garnitures de friction avec une précision dont les variations, d'un dispositif à l'autre, sont inférieures à 0,5 mm.

Avantageusement, la pièce de contact est réalisée en laiton.

Pour fabriquer une telle pièce de contact, on peut, dans un premier mode de réalisation de l'invention, découper une plaquette métallique et la former pour constituer les parties formant pince et respectivement manchon.

Dans un autre mode de réalisation, la pièce de contact résulte du décolletage, du matriçage ou autre, d'une pièce métallique cylindrique creuse, qui est calibrée au diamètre que l'on désire donner à la partie formant manchon de la pièce de contact.

Dans le but de mieux faire comprendre l'invention, on va en décrire maintenant un mode de réalisation donné à titre d'exemple et sans aucun caractère limitatif de la portée de l'invention, en référence au dessin annexé dans lequel :
- la figure 1 est une vue en coupe partielle d'un dispositif selon un mode de réalisation de l'invention,
- la figure 2 est une vue en coupe selon II-II de la partie formant manchon de la pièce de contact de la figure 1,
- la figure 3 est une vue en coupe selon III-III de la partie formant pince de la pièce de contact de la figure 1,
- la figure 4 est une vue analogue à la figure 2 représentant la partie formant manchon avant formage, dans le cas d'une pièce de contact obtenue par découpage,
- la figure 5 est une vue analogue à la figure 3 représentant la partie formant pince avant sertissage, dans le cas d'une pièce de contact obtenue par découpage.

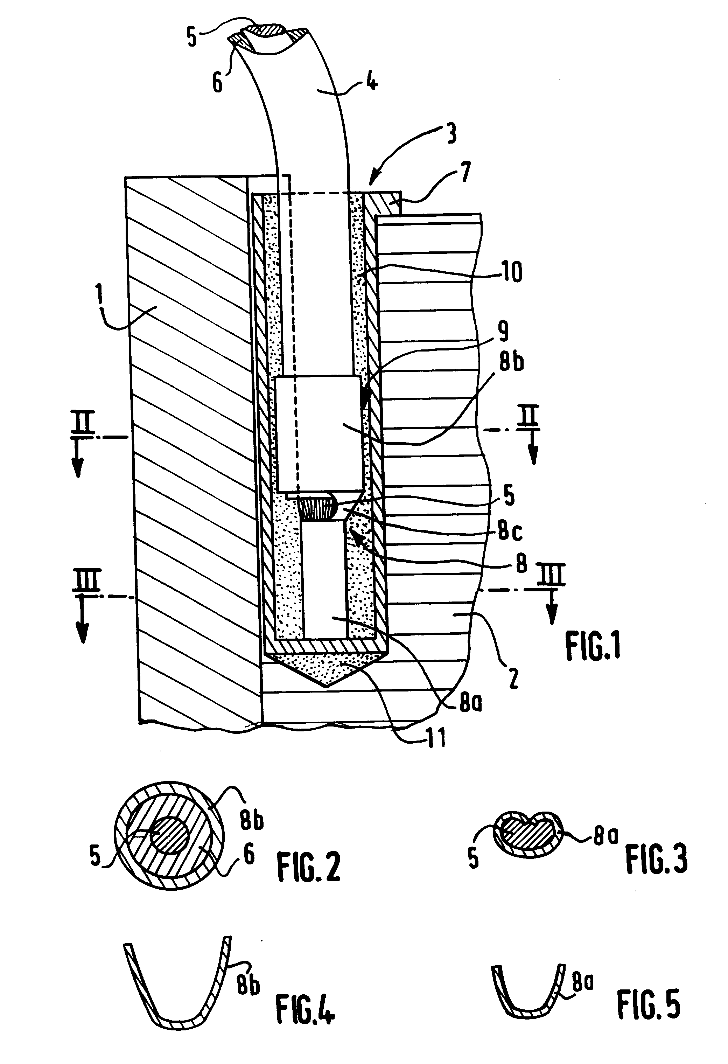

Sur la figure 1, on a représenté une plaquette de frein comportant une plaque-support 1 et une garniture de friction 2.

La garniture de friction 2 comporte, à proximité de la plaque-support 1, un perçage 3 réalisé sur une de ses faces latérales dans une direction sensiblement parallèle à sa surface d'usure.

Un fil conducteur électrique 4, comportant une âme conductrice 5 et une gaine isolante 6, pénètre dans le perçage 3.

L'extrémité du fil 4 est emmanchée dans un embout isolant 7 dont les dimensions extérieures correspondent sensiblement à celles du perçage 3.

Conformément à l'invention, l'extrémité du fil conducteur électrique 4 est engagée dans une pièce de contact 8.

Cette pièce de contact 8 comporte une partie d'extrémité formant pince 8a et une partie formant manchon 8b.

La partie formant pince est sertie sur l'extrémité dénudée 5 du fil conducteur électrique 4, comme représenté en coupe sur la figure 3.

Une partie intermédiaire 8c de la pièce de contact 8 relie la partie formant pince 8a à la partie formant manchon 8b.

La partie formant manchon 8b est enroulée autour de la gaine 6, pour prendre une forme cylindrique.

Le diamètre extérieur de la partie formant manchon 8b, qui est supérieur au diamètre maximal de la partie formant pince 8a, est calibré avec une tolérance maximale donnée, par exemple de 0,075 mm, de sorte que le jeu 9 existant entre la partie formant manchon 8b et l'embout isolant 7 soit le plus faible possible.

Pour la clarté du dessin, on a volontairement agrandi le jeu 9.

Grâce à la partie formant manchon 8b, le positionnement de l'âme conductrice 5 du fil conducteur 4 à l'intérieur de la garniture 2 n'influence en rien le niveau de détection d'usure.

A la manière connue, le fil conducteur électrique 4 et la pièce de contact 8 sont maintenus dans l'embout isolant 7 à l'aide d'une colle 10, l'embout isolant 7 étant également maintenu dans le perçage 3 de la garniture 2 à l'aide d'une colle 11.

Dans une variante, l'embout isolant pourrait être maintenu dans la garniture par des moyens mécaniques.

Sur les figures 4 et 5, on a représenté respectivement la partie formant manchon 8b et la partie formant pince 8a de la pièce de contact, avant formage et respectivement sertissage de celles-ci sur le fil conducteur 4.

Dans le mode de réalisation décrit, la pièce de contact 8 est réalisée par découpage et formage d'une plaquette métallique en laiton.

Dans un autre mode de réalisation, on pourrait réaliser la pièce de contact 8 par décolletage, matriçage ou autre d'une pièce cylindrique présentant la forme calibrée de la partie formant manchon 8b.

Il est bien entendu que le mode de réalisation qui vient d'être décrit ne présente aucun caractère limitatif et qu'il pourra recevoir toutes modifications désirables sans sortir pour cela du cadre de l'invention.

En particulier, bien que l'invention ait été décrite en relation avec un dispositif de détection d'usure monofilaire, elle s'applique également à un dispositif de détection d'usure bifilaire.

## Revendications

1. Dispositif de détection d'usure de garnitures de friction, notamment de garnitures de plaquettes de freins, comportant au moins un fil conducteur électrique (4) gainé emmanché dans un embout isolant (7) inséré dans un trou réalisé sur une paroi latérale de la garniture, selon un axe sensiblement parallèle à la surface d'usure de la garniture, et caractérisé par une pièce de contact (8), réalisée en un matériau électriquement conducteur, et comportant une partie (8a) formant pince qui est sertie sur l'extrémité dénudée du fil conducteur électrique (4), et par le fait que ladite pièce de contact (8) comporte en outre une partie cylindrique calibrée formant manchon (8b) qui enveloppe le fil conducteur électrique (4) sur sa partie gainée (6), la partie formant pince (8a) et la partie formant manchon (8b) de la pièce de contact (8) étant reliées électriquement.

2. Dispositif selon la revendication 1, caractérisé par le fait que la pièce de contact (8) est réalisée en laiton.

3. Dispositif selon l'une quelconque des revendications 1 et 2, caractérisé par le fait que la pièce de contact (8) est issue de découpage et formage d'une plaquette métallique.

4. Dispositif selon l'une quelconque des revendications 1 et 2, caractérisé par le fait que la pièce de contact (8) est issue de décolletage d'une pièce métallique cylindrique creuse calibrée au diamètre désiré pour la partie formant manchon (8b) de la pièce de contact (8).

## Claims

1. Device for detecting wear of brake linings, especially linings of brake pads, including at least one sheathed electrically conducting wire (4) fitted into an insulating ferrule (7) inserted into a hole made in a side wall of the lining, along an axis substantially parallel to the wear surface of the lining, and characterized by a contact piece (8) made of an electrically conducting material and including a part (8a) forming a clamp which is crimped onto the stripped end of the electrically conducting wire (4), and by the fact that the said contact piece (8) furthermore includes a calibrated cylindrical part forming a sleeve (8b) which surrounds the electrically conducting wire (4) over its sheathed part (6), the clamp-forming part (8a) and the sleeve-forming part (8b) of the contact piece (8) being electrically connected.

2. Device according to Claim 1, characterized by the fact that the contact piece (8) is made of brass.

3. Device according to either of Claims 1 and 2, characterized by the fact that the contact piece (8) results from the cutting and forming of a small metal plate.

4. Device according to either of Claims 1 and 2, characterized by the fact that the contact piece (8) results from the machining of a hollow cylindrical metal piece calibrated to the desired diameter for the sleeve-forming part (8b) of the contact piece (8).

## Patentansprüche

1. Einrichtung zum Erfassen des Verschleisses von Reibbelägen, insbesondere Bremsscheiben, die mindestens einen elektrischen Leiter (4) aufweist, der umhüllt ist von und eingefügt ist in ein isoliertes Ansatzstück (7) und der in einem Loch untergebracht ist, das in einer Seitenwand des Belags und mit einer im wesentlichen parallel zur abnutzenden Reiboberfläche des Belages verlaufenden Bohrungsachse ausgeführt ist, gekennzeichnet durch ein Kontaktstück (8), das aus einem elektrisch leitenden Material hergestellt ist und einen eine Klemmung bewirkenden Bereich (8a) hat, der fest auf dem Endbereich des blanken elektrischen Leiters (4) sitzt, und dadurch, daß dieses Kontaktstück (8) zudem einen kalibrierten eine Muffe (8b) bildenden Zylinderbereich hat, der den elektrischen Leiter (4) in seinem umhüllten Bereich (6) umschließt, und daß der eine Klemmung bewirkende Bereich (8a) und der eine Muffe (8b) bildende Bereich (8b) des Kontaktstücks (8) elektrisch miteinander verbunden sind.

2. Einrichtung nach Anspruch 1, dadurch gekennzeichnet, daß das Kontaktstück (8) aus Messing gefertigt ist.

3. Einrichtung nach Anspruch 1 oder 2, dadurch gekennzeichnet, daß das Kontaktstück (8) hergestellt ist durch Zuschneiden und Pressen einer metallischen Scheibe.

4. Einrichtung nach Anspruch 1 oder 2, dadurch gekennzeichnet, daß das Kontaktstück (8) hergestellt ist durch Abstechen eines zylindrischen metallischen Hohlteils, das auf den gewünschten Durchmesser für den die Muffe (8b) des Kontaktstücks (8) bildenden Bereich kalibriert ist.
